# EUROPEAN PATENT SPECIFICATION

(11) **EP 3 683 457 B1**
(45) Date of publication and mention of the grant of the patent: **07.02.2024**
(21) Application number: 19382022.2
(22) Date of filing: 15.01.2019
(51) Int. Cl.: F16B 19/10, F16B 43/02, F16B 39/02

(54) **TEMPORARY FIXIND DEVICE FOR EXTRUSION AND METHOD OF USING IT**
TEMPORÄRE VERBINDUNGSVORRICHTUNG FÜR VERDRÄNGUNG UND DEREN VERWENDUNG
DISPOSITIF THE FIXATION TEMPORAIRE POUR EXTRUSION ET PROCÉDÉ POUR SON UTILISATION

(43) Date of publication of application: 22.07.2020
(73) Proprietor: Aciturri Engineering S.L.U., 47151 Boecillo (Valladolid) (ES)
(72) Inventor: CIMADEVILLA GARCÍA, David, 47151 BOECILLO (Valladolid) (ES); MOLINA DÍEZ, Francisco, Javier, 47151 BOECILLO (Valladolid) (ES)
(74) Representative: Herrero & Asociados, S.L.

(56) References cited:
- EP-A1- 0 466 609
- EP-A1- 1 450 053
- FR-A1- 2 676 258
- FR-A1- 2 919 691
- US-A1- 2017 307 002

## Description

### Object of the Invention

The present invention relates to the field of mechanics, and more specifically to a device and method for thickness control during extrusion.

### Background of the Invention

Extrusion processes are a common tool for fixing panels in various industries, such as the aeronautics industry, for example. In processes of this type, a liquid resin H(typically known as a "shim") is introduced in a space comprised between two panels. After adding additional liquid components and/or curing processes, the resin solidifies, fixing the panels to one another. Nevertheless, the resins commonly used in techniques of this type, such as those incorporating aluminum powder, for example, have a high viscosity, complicating volume control during the introduction thereof in the extrusion space. In other words, if the extrusion space comprised between the two panels has a certain initial thickness in the absence of resin, the introduction of said resin typically entails an increase in thickness. Additionally, said increase in thickness typically varies according to the area of the panel, generating an extrudate with an irregular shape and volume. Deviations and irregularities of this type are particularly critical in the mentioned aeronautics industry, where components require high morphological precision.

To keep the panels demarcating the extrusion space attached to one another during the resin solidification process, various temporary fixing devices such as combinations of nuts and screws, pins, clamps, etc., for example, are known in the state of the art. For example, document US 5,620,287 A describes a temporary fixing structure intended for a panel assembly which furthermore incorporates a clamp load control. To that end, it comprises a screw with an anvil-shaped end, as well as a nut having a shape similar to a fixing element to prevent subsequent deformations.

In particular, clamps with cotters are known, in which a user can manually change between two configurations: a first configuration in which tips of the clamps are moved longitudinally beyond the limit of the cotter, with said tips being in contact, and a second configuration in which the tips are separated by said cotter, increasing the total thickness of the clamp. This allows introducing the clamps through holes using the first configuration, then changing to the second configuration to fix said clamps to the opposite end of the hole. Based on this underlying concept, different geometries for the clamps and cotter such as the one described in document US 4,952,106 A, EP1450053, FR2676258 or US2017307002 for example, are known.

However, clamp-based fixing devices of this type do not allow precisely controlling the thickness comprised between the panels being fixed, giving rise to the mentioned problems of an irregular extrudate. There is therefore still a need in the state of the art for a temporary fixing method and device, applicable to extrusion panels, capable of providing precise thickness control between said panels. Additionally, it is desirable for said device to be robust during mechanical operations of the extrusion process, and to have a compact structure which minimizes the alterations required in the panels for introducing the device.

### Description of the Invention

The present invention solves the problems described above by means of a temporary fixing method and device capable of controlling thickness during an extrusion process by means of the combination of retractable clamps and at least one position control nut which maintain a reference of the thickness of the extrusion space even after the device has been removed. The invention is as defined in claims 1 and 8.

A first aspect of the invention relates to a temporary fixing device for thickness control in extrusion processes, comprising:
- A main body, preferably with at least a first inner cavity and a second inner cavity arranged parallel to a main axis and separated by a first stop.
- Retractable clamps with at least two tips, arranged around a cotter and partially housed in the main body, preferably in the first inner cavity and in the second inner cavity. The clamps are movable along the main axis, giving rise to at least a first position and a second position, corresponding to the ends of movement of the clamps with respect to the main axis:
   i. In the first position, the tips of the clamps are moved beyond the cotter, with said tips being in contact. As a result of said contact, the resulting thickness of the tips is reduced, allowing the passage of the clamps through holes made in the panels demarcating an extrusion space. Preferably, said first position is defined by the contact of a protuberance of the clamps with the first stop separating the first cavity and the second cavity of the main body, with said protuberance preferably being perpendicular to the main axis.
   ii. In the second position, the tips of the clamps are in contact with the cotter, arranged on both sides of said cotter. Accordingly, the resulting thickness of the clamps is greater than in the first position, which allows fixing the clamps to an end of the hole made in the panels demarcating an extrusion space. In other words, when the clamps go through the hole and are arranged in said second position, the relative position between the device and said panels is fixed by the contact between the rear base of the tips of said clamps (i.e., the surface of the tips closest to the main body) and the surface of the panel close to the hole. Preferably, said second position is defined by the contact of the protuberance of the clamps with a second stop introduced in the first inner cavity.
- A first position control nut arranged around the main body. The first position control nut is movable with respect to the main body along the main axis by means of a thread arranged on an outer surface of said main body. In other words, a rotation of the first control nut results in a longitudinal movement of said nut with respect to the main body. This allows the fixing thereof to the panel of the extrusion space opposite the one in which the clamps are fixed. This allows maintaining the thickness reference even after the device has been removed from the extrusion space, as well as applying said reference to compensate for any increase in thickness resulting from filling with resin.
- A second control nut, integral with the clamps, which allows controlling the movement of said clamps along the main axis. In other words, a rotation of the second control nut results in a longitudinal movement of the clamps with respect to the main body. The second control nut is preferably at least partially housed inside the main body at an end opposite the tips of the clamps. The second control nut also preferably has an integral lever which facilitates its turning.
- First fixing means located in the first position control nut. When the first fixing means are in a first configuration (i.e., a passage configuration), they allow the relative movement between the first position control nut and the main body. In contrast, when the first fixing means are in a second configuration (i.e., a locking configuration), they prevent said relative movement between the first position control nut and the main body.

Said first fixing means may be implemented by means of a first screwable stud bolt, for example, by means of a first screwable stud bolt that can be controlled by means of an Allen key or any other turning system known in the state of the art. The first stud bolt is preferably arranged perpendicular to the main axis.

When the first stud bolt is in a passage configuration, the end of said first stud bolt closest to the main body is completely housed inside the first position control nut. In contrast, when the first stud bolt is in a locking configuration, said end exerts pressure on an outer surface of the main body, preventing its movement.
- Optional second fixing means located in a plug located on the main body, at the end opposite the tip of the clamps. When the second fixing means are in a first configuration (i.e., a passage configuration), they allow the relative movement between the second position control nut and the main body. In contrast, when the second fixing means are in a second configuration (i.e., a locking configuration), they prevent said relative movement between the second position control nut and the main body.
   Said second fixing means are implemented by means of a second screwable stud bolt, for example, by means of a second screwable stud bolt that can be controlled by means of an Allen key or any other turning system known in the state of the art. The second stud bolt is preferably arranged parallel to the main axis. When the second stud bolt is in a passage configuration, the end of said second stud bolt closest to the main body is completely housed inside the plug. In contrast, when the second stud bolt is in a locking configuration, said end exerts pressure on a surface of the main body, preventing its movement.
- The device may further comprise a self-aligning washer (or any other type of self-aligning device known in the state of the art, such as a ball and socket joint, for example) which allows aligning the cotter and the hole if said hole is not perfectly perpendicular to the panels demarcating the extruded space due, for example, to variations in the thickness of said extrusion space. In this case, the washer comprises a first conical surface (181) arranged facing a second conical surface (114) of the first position control nut (110).

A second aspect of the invention relates to a temporary fixing method for thickness control in extrusion processes, in which the device of the first aspect of the invention is applied to an extrusion space demarcated by a first panel and a second panel. It must be noted that the term panel is used in this context to refer to any body, part, or element capable of demarcating the extrusion space, regardless of its shape or material. The extrusion space has a first initial thickness prior to resin deposition which increases to a second thickness after said deposition. For the application of the method, the first panel and the second panel comprise a hole which goes through them, preferably having a circular section and being perpendicular to the surface of at least the second panel (i.e., to the panel on which the first position control nut is supported), the hole having a diameter that is adapted to the diameter of the clamps of the device, where said hole can be made as part of the method or before the application thereof. Regardless of these options, the method comprises:
i. Introducing the retractable clamps in the hole going through the first panel and the second panel. The clamps are partially housed in a main body and arranged around a cotter, resulting in at least two possible positions depending on the relative movement between the cotter and the clamps. The step of introducing the clamps in the hole is performed with the clamps in a first position, in which the tips of the clamps are moved beyond the cotter, with said tips being in contact. Said first position is preferably demarcated by the arrangement of a protuberance of the clamps (perpendicular to the main axis) next to a first stop separating a first inner cavity.
ii. Moving the clamps to a second position, in which the tips of the clamps are in contact with the cotter, therefore being arranged on both sides of said cotter with a resulting diameter that is larger than in the first position. Preferably, said second position is defined by the contact of the protuberance of the clamps with a second stop introduced in the first inner cavity. This second position prevents the passage of the clamps through the hole going through the first panel, the device therefore being fixed to said first panel. As the lever is turned and the clamps open, said clamps are gently pulled while their diameter still allows their movement through the hole until the rear base of the tips of the clamps comes into contact with the surface of the first panel close to the hole.
iii. Moving a first position control nut (to the second panel or to a washer in contact with said second panel, depending on the particular implementation), the distance between the first position control nut and the tips of the clamps therefore serving as a reference of the thickness of the extrusion space (including the thickness of the first and second panel). The first control nut is moved by means of a thread arranged on the outside of the main body housing the clamps. Once the thickness reference has been established, the position of the first position control nut is fixed with first fixing means, such as a first set screw, for example.
iv. Removing the clamps from the hole once the thickness reference has been obtained. Preferably, the step of removing the clamps from the hole comprises moving the clamps back to the first position in which the tips of the clamps are in contact.
v. Filling the extrusion space with a resin (typically known as a "shim"), such as a liquid resin with aluminum powder, for example. This increases the thickness of said extrusion space to a second thickness.
vi. Preferably, applying a liquid release agent on at least one of the panels demarcating the extrusion space, thereby allowing the release, cleaning, and inspection of the resin bed finish. The liquid release agent can also be applied on the temporary fixing device itself to prevent it from jamming as a result of the curing of the resin.
vii. Reintroducing the clamps in the hole, with the clamps being in the first position during said introduction.
viii. Moving the clamps back to the second position, with the clamps being separated by the cotter and in contact with the first panel. Given that the first position control nut has maintained its relative distance with respect to the main body since step iii, the reference of the thickness of the extrusion space is maintained. Therefore, by moving the clamps back to the second position under these circumstances, the excess resin which increases the thickness is driven out of the extrusion space which recovers its first original thickness.
ix. Finally, waiting out the curing time corresponding to the resin used, and removing the clamps again, first moving them to the first position in which the tips of the clamps are in contact to allow the passage thereof through the hole.

In the case of using a self-aligning washer and first position nut (i.e., with a first conical surface and a second conical surface, respectively), the method further comprises arranging the washer in contact with the second panel, and arranging the second conical surface in contact with the first conical surface, such that the cotter is aligned with the hole regardless of the angle between said hole and the second panel.

It must be noted that any preferred option of the device of the invention, as well as any feature of any particular embodiment thereof, can be applied to the method of the invention, and vice versa.

The device and methods that have been described therefore provide a robust extrusion space thickness control, preventing deformations in said space as a result of filling with resin. Said thickness control is furthermore highly precise, where it is only limited by the pitch of the threads used for moving the clamps and the first position control nut. These and other advantages of the invention will become apparent in view of the detailed description thereof.

### Description of the Drawings

For the purpose of helping to better understand the features of the invention according to a preferred practical embodiment thereof and to complement this description, the following non-limiting, illustrative drawings are attached as an integral part thereof:
Figure 1 (side section view) shows a section of the temporary fixing device for extrusion of the invention, according to a particular embodiment thereof.
Figure 2 (perspective view) shows some external components of the device of the invention, according to a particular embodiment thereof.
Figure 3 (perspective view) illustrates some internal components of the same embodiment of the device of the preceding figure.
Figure 4 (perspective view) shows in greater detail the morphology of the clamps of the device of the invention, according to a particular embodiment thereof.
Figure 5 (side section view) illustrates by way of example a first position of the clamps in which the tips are in contact, according to a particular embodiment of the device of the invention.
Figure 6 (side section view) illustrates by way of example a second position of the clamps in which the tips are separated by the cotter, according to a particular embodiment of the device of the invention.
Figure 7 (side section view) illustrates the position of the threads in the clamps of the device of the invention, according to a particular embodiment thereof.
Figure 8 (perspective view) shows in greater detail the morphology of the main body of the device of the invention, according to a particular embodiment thereof.
Figure 9 (side section view) illustrates the position of the threads in the main body of the device of the invention, according to a particular embodiment thereof.
Figure 10 (perspective view) shows in greater detail the morphology of the cotter of the device of the invention, according to a particular embodiment thereof.
Figure 11 (perspective view) shows in greater detail the morphology of the second position control nut of the device, and illustrates the position of the threads in said second position control nut, according to a particular embodiment of the invention.
Figure 12 (perspective view) shows in greater detail the morphology of the plug of the device of the invention, according to a particular embodiment thereof.
Figure 13 (side section view) illustrates the position of the threads in the plug of the device of the invention, according to a particular embodiment thereof.
Figure 14 (perspective view) shows in greater detail the morphology of a first embodiment of the first position control nut of the device of the invention, according to a particular embodiment thereof.
Figure 15 (side section view) illustrates a first step of introducing the temporary fixing device in a hole which goes through the extrusion space, according to a particular embodiment of the method of the invention.
Figure 16 (side section view) illustrates a second step of fixing the clamps of the device to the first panel which demarcates the extrusion space, according to a particular embodiment of the method of the invention.
Figure 17 (side section view) illustrates a third step of adjusting the first position control nut, according to a particular embodiment of the method of the invention.
Figure 18 (side section view) illustrates a fourth step of releasing the clamps of the device, according to a particular embodiment of the method of the invention.
Figure 19 (side section view) illustrates a fifth step of removing the device, according to a particular embodiment of the method of the invention.
Figure 20 (side section view) illustrates a sixth step of resin extrusion, according to a particular embodiment of the method of the invention.
Figure 21 (side section view) illustrates a seventh step of introducing the device, according to a particular embodiment of the method of the invention.
Figure 22 (side section view) illustrates an eighth step of extrusion thickness control, according to a particular embodiment of the method of the invention.
Figure 23 (side section view) illustrates a ninth step of removing the device, according to a particular embodiment of the method of the invention.
Figure 24 (perspective view) shows in greater detail the morphology of a second embodiment of the first position control nut of the device of the invention, according to a particular embodiment thereof.
Figure 25 (perspective view) shows a washer of the device of the invention, according to a particular embodiment thereof.
Figure 26 (perspective view) shows the arrangement of said washer in the device of the invention, according to a particular embodiment thereof.
Figure 27 (side section view) illustrates the use of said washer in the event that the hole for the cotter is not perpendicular to the panel on which the device is arranged.

### Preferred Embodiment of the Invention

In this text, the term "comprises" and derivations thereof (such as "comprising", etc.) must not be understood in an exclusive manner, i.e., these terms must not be interpreted as excluding the possibility that what is being described and defined may include more elements, steps, etc.

It must be noted that to facilitate understanding of the invention and the arrangement of the elements making up same, a line located in the center of the clamps which runs parallel to the longest dimension of said clamps has been defined as a main axis of the device. Likewise, to simplify the nomenclature, said main axis has been taken as a vertical axis, considering the end at which the tips of the clamps are located as the "lower" end, and the end at which the lever is located as the "upper" end. Nevertheless, said nomenclature is merely illustrative, without limiting the orientation of the device during application.

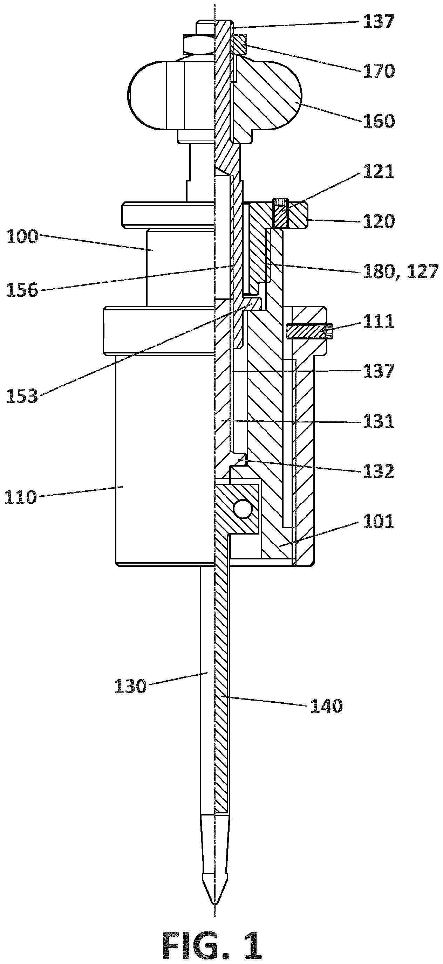

Figure 1 schematically shows a side section of a particular embodiment of the temporary fixing device for extrusion of the invention. The device comprises a mainly cylindrical main body (100) to which there is externally screwed a first position control nut (110). In other words, the main body (100) has a thread on its outer side face, whereas the first position control nut (110) comprises a complementary thread on its inner side face. A rotation of the first position control nut (110) therefore results in a linear movement along the main axis of the device.

The first position control nut (110) likewise has first fixing means (111), such as a screwable stud bolt, for example, controlled by the user by means of an Allen key or any other technique known in the state of the art. The first fixing means (111) are arranged horizontally in a hole of the first position control nut (110), being able to alternate between two configurations. In a first configuration (i.e., a passage configuration), the end of the first stud bolt closest to the main body (100) is completely housed inside the first position control nut (110), therefore allowing the relative movement between the first position control nut (110) and the main body (100). In contrast, when the first fixing means are in a second configuration (i.e., a locking configuration), said end exerts pressure on an outer surface of the main body (100), preventing the relative movement thereof with the first position control nut (110).

The main body (100) is covered by a plug (120), the relative movement of which with the main body (100) is controlled by means of second fixing means (121), which can also be a second screwable stud bolt controlled by the user by means of an Allen key or any other technique known in the state of the art. The second fixing means (121) are arranged vertically in a hole of the plug (120), being able to alternate between two configurations. In a first configuration (i.e., a passage configuration), the end of the second stud bolt closest to the main body (100) is completely housed inside the plug (120), therefore allowing the relative movement between the plug (120) and the main body (100). In contrast, when the second fixing means are in a second configuration (i.e., a locking configuration), said end exerts pressure on an upper surface of the main body (100), preventing the relative movement thereof with respect to plug (120).

At the end opposite the plug (120), the main body (100) partially houses retractable clamps (130), arranged on both sides of a cotter (140). The relative position of the clamps (130) with respect to the main body (100) is controlled by means of turning a second position control nut (150) integral with said clamps (130). In other words, the main body (100) has a thread on an inner face, whereas the second position control nut (150) comprises a complementary thread in its inner outer side face. A rotation of the second position control nut (150) therefore results in a linear movement of the clamps along the main axis of the device. To facilitate control of the second position control nut (150), the device likewise comprises a lever (160) integral with said second position control nut (150), located close to the upper end thereof. The position of the lever (160) is fixed by a lock nut (170).

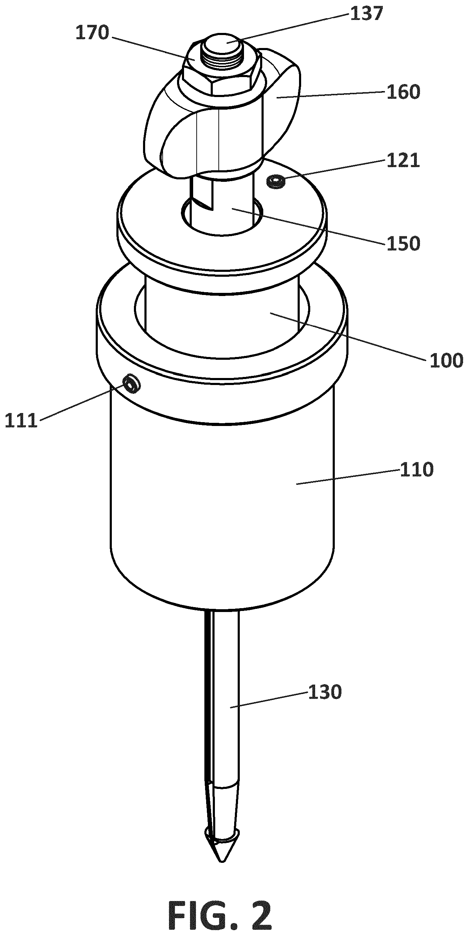

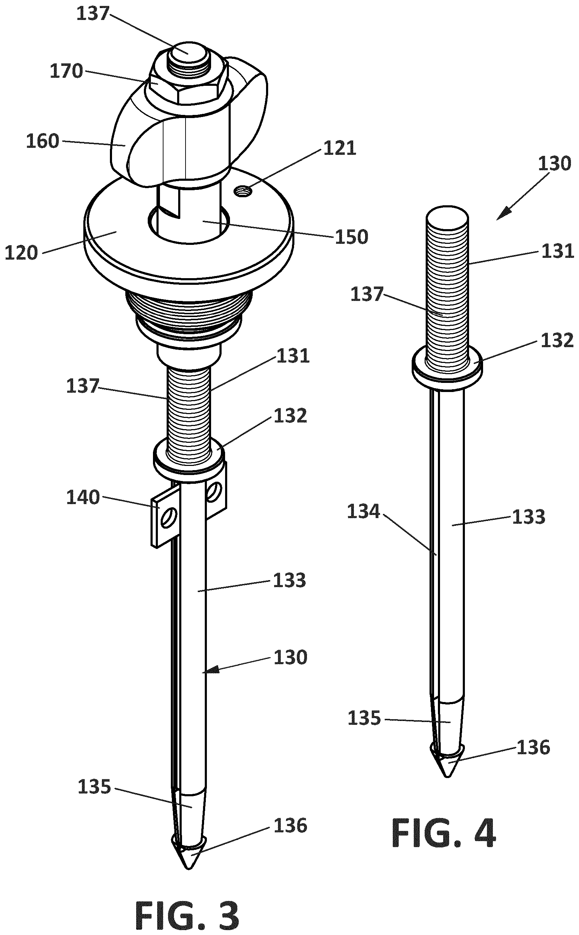

Figure 2 schematically shows a perspective view of the outside of the described particular embodiment of the device, whereas Figure 3 depicts the same embodiment, but with the main body (100) and the first position control nut (110) being eliminated to show the internal elements of the device in greater clarity.

Figure 4 illustrates in greater detail the morphology of a preferred embodiment of the clamps (130), although different variations of said morphology can be implemented as known in the state of the art. The clamps (130) comprise a cylindrical base (131) at one of their ends, on which the second position control nut (150) exerts the force which results in the vertical movement of the clamps (130). At the lower end of the base (131), the clamps comprise a protuberance (132) perpendicular to the main axis (i.e., extending horizontally from the base). The protuberance (132) limits the movement of the clamps (130) inside the main body (100) as described below. In this case, a disk-shaped protuberance (132) is depicted, although other morphologies are possible in different preferred embodiments, provided that they maintain the mentioned movement limitation functionality.

Next, the clamps (130) comprise a mainly cylindrical first region (133) with a constant diameter and a central groove (134) in which the cotter (140) is housed. At the end of the first region (133) opposite the base (131), there is a second region (135) with a variable diameter, in which the cross-section of the clamps (130) gradually decreases, maintaining the central groove (134). Finally, the clamps (130) comprise at least two tips (136) after the second region (135), i.e., at the end opposite the base (131). The tips (136) have a mainly conical or pyramidal shape, with their base (i.e., the area thereof with a larger diameter) being in contact with the second region (135), and with an abrupt change in section size with respect to said second region (135) being generated at the interface between both elements. This allows the tips (136) of the clamps to have two different configurations depending on their relative movement with respect to the cotter (140).

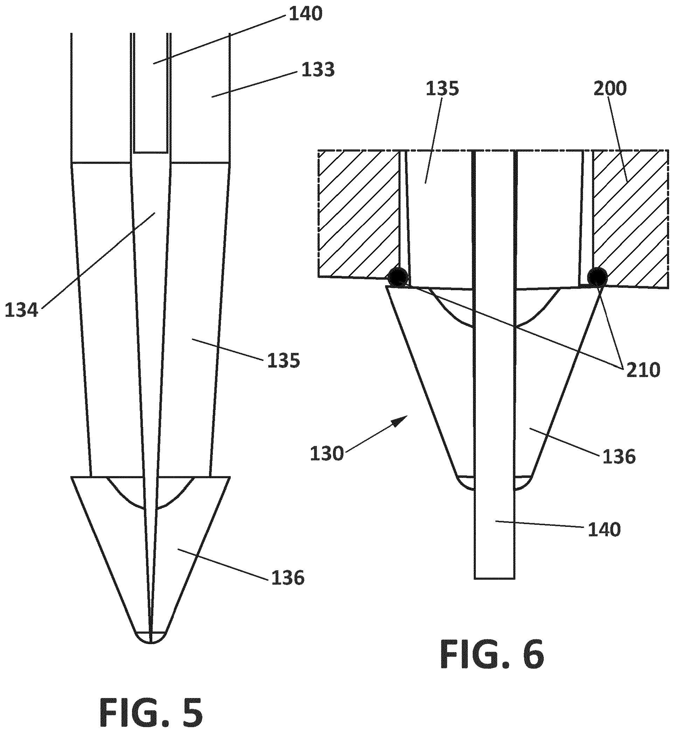

Figure 5 shows a first configuration of the clamps (130), which will be referred to herein as a "closed" configuration, corresponding to a first position of the clamps (130) with respect to the cotter (140), in which the tips (136) are arranged beyond the end of the cotter (140). In said first configuration, the absence of the cotter (140) causes the thickness of the groove (134) of the second region (135) to start decreasing until the tips (136) come into contact with one another at the lower end thereof. The maximum diameter of the tips (136) is therefore equal to or less than the diameter of the first region (133), so the clamps can be introduced through any hole adapted to said diameter.

Figure 6 shows a second configuration of the clamps (130), which will be referred to herein as an "open" configuration, corresponding to a second position of the clamps (130) with respect to the cotter (140), in which the tips (136) are arranged on both sides of the cotter (140). In said second configuration, the presence of the cotter (140) keeps the tips (136) separated, so the upper end of the tips (136) has a larger diameter than the first region (133), preventing the passage thereof through a hole (250) adapted to said first region (133). Instead, during certain steps of the method of the invention, a first contact region (210) is generated between the tips of the clamps (136) and a first panel (200), referred to as lower panel, which demarcates the extrusion volume (230).

In other words, the first region (133) and the second region (135) have a smaller diameter than the hole (250), which allows their passage and removal. The clamps (130) pass through said hole (250) in the first (closed) position, whereas when the clamps (130) are withdrawn by turning the lever (160), said clamps (130) open up against the cotter (140). The position of the device with respect to the first panel (200) and the second panel (220) is fixed in this second position of the clamps (130) through the contact between the rear portion of the tips of the clamps (136) and said first panel (200).

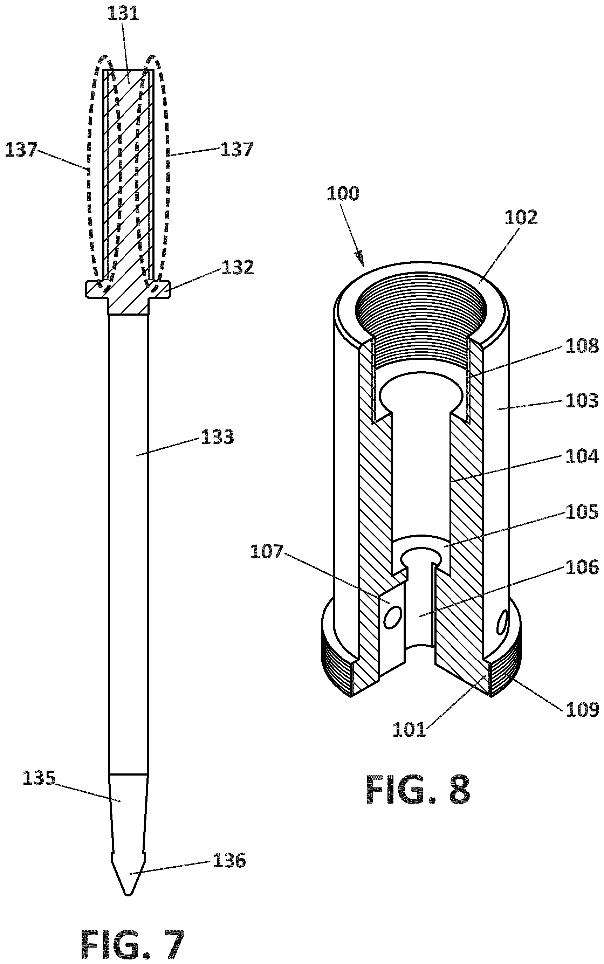

Figure 7 illustrates the position of a first thread (137) arranged on the outer wall of the base (131) of the clamps (130), and attaching said clamps (130) to the second position control nut (150).

Figure 8 shows in greater detail a preferred embodiment of the main body (100) of the device. The main body (100) has a mainly cylindrical shape with multiple concentric cavities that are also cylindrical. The outer side surface comprises a smooth wall (103) and a cylindrical protuberance (101), with a larger diameter than the smooth wall (103). The cylindrical protuberance (101) comprises the thread complementary to the first position control nut (110) allowing the relative movement between said first position control nut (110) and the main body (100). Likewise, the upper base (102) serves as a contact surface with the plug (120), the position of said plug being fixed by the second fixing means (121).

The main body (100) internally comprises a first inner cavity (104) dimensionally adapted for housing the protuberance (132) of the clamps (130) and allowing the longitudinal movement of said clamps (130). The first inner cavity (104) is connected at its lower end with a second inner cavity (106) that is also cylindrical but has a smaller diameter. The second inner cavity (106) is dimensionally adapted for housing the first region (133) of the clamps (130), preventing the passage of the protuberance (132). The interface between the first inner cavity (104) and the second inner cavity (106) therefore acts as a first stop (105), such that when the protuberance (132) is in contact with said first stop (105), the clamps are in the closed configuration. The second inner cavity (106) likewise comprises two side grooves (107) housing the cotter (140). Finally, at the end opposite the second inner cavity (106), the main body (100) comprises a third inner cavity (108) that is also cylindrical, has a larger diameter than the first inner cavity (104), and partially houses the plug (120).

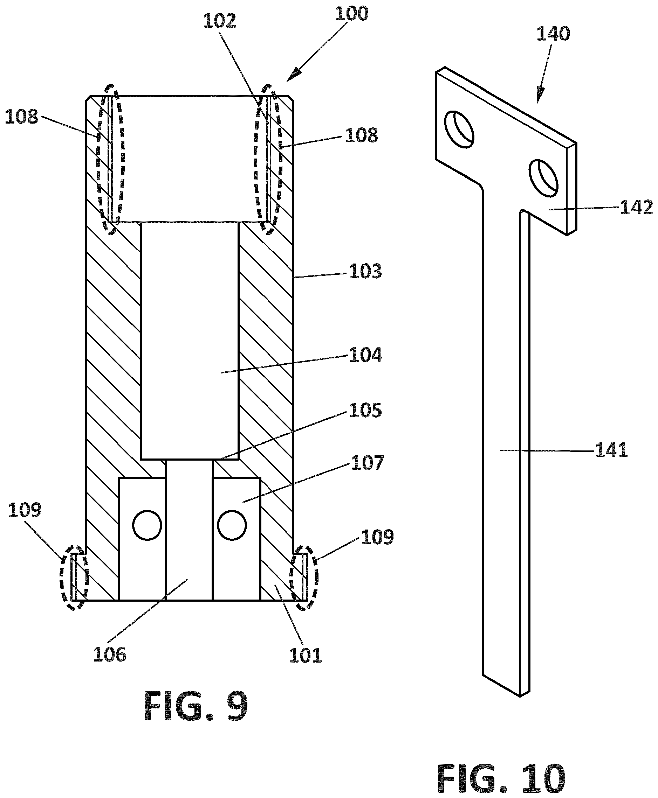

Figure 9 illustrates the position of a second thread (108) arranged on an inner wall of the upper base (102) of the main body (100), attaching said main body (100) with the plug (120). It likewise illustrates the position of a third thread (109), arranged on an outer wall of the cylindrical protuberance (101), attaching said main body (100) with the first position control nut (110).

Figure 10 shows in greater detail a preferred embodiment of the cotter (140) of the device. The cotter (140) is the combination of two flat elements with a rectangular section and constant thickness that is smaller than the groove (134) of the clamps (130):
- A first element (141) with a first width that is adapted to the width of the first region (133) of the clamps (130), said first element being completely housed inside said first region (133) when the clamps (130) are in the closed configuration.
- A second element (142) with a second width that is larger than the first width, said second element being partially housed in the upper end of the groove (134) of the clamps and partially housed in the two side grooves (107) of the second inner cavity (106).

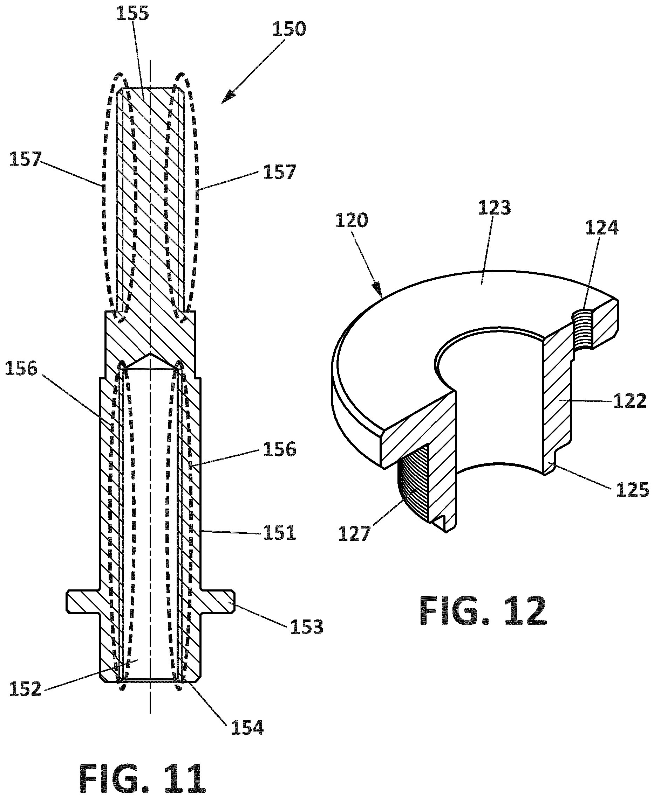

Figure 11 shows in greater detail a preferred embodiment of the second position control nut (150) of the device. Said second position control nut (150) comprises a hollow cylindrical body (151) followed by an extension (155) of a smaller diameter in which the lever (160) and the lock nut (170) are fixed by means of a fourth thread (157). Said hollow cylindrical body (151) is divided into two sections by a disk (153) of a larger diameter, such that the section above the disk (153) is partially housed in the third inner cavity (108) of the main body (100) and the section below the disk (153) is housed in the first inner cavity (104) of the main body (100).

The clamps (130) are housed in the cylindrical cavity (151), with both elements being fixed by a fifth thread (156) arranged on the inner face of said cylindrical cavity (151), such that a rotation of the position control nut (150) results in a longitudinal translation of the clamps (130). Additionally, the lower base of the second position control nut (150) serves as a second stop (154), demarcating the upper extreme of the movement of the clamps (130).

Figure 12 shows in greater detail a preferred embodiment of the plug (120) of the device comprising three cylindrical sections with one and the same cavity with a constant diameter going through said sections: an upper section (123) with a larger diameter in which there is a hole (124) adapted for the second fixing means (121) to go through, a lower section (125) with a smaller diameter, and a central section (122) with an intermediate diameter. It must be noted that the implementation of the first fixing means (111) and the second fixing means (121) is not limited to set screws, where fixing can be performed by means of any other fixing technique known in the state of the art.

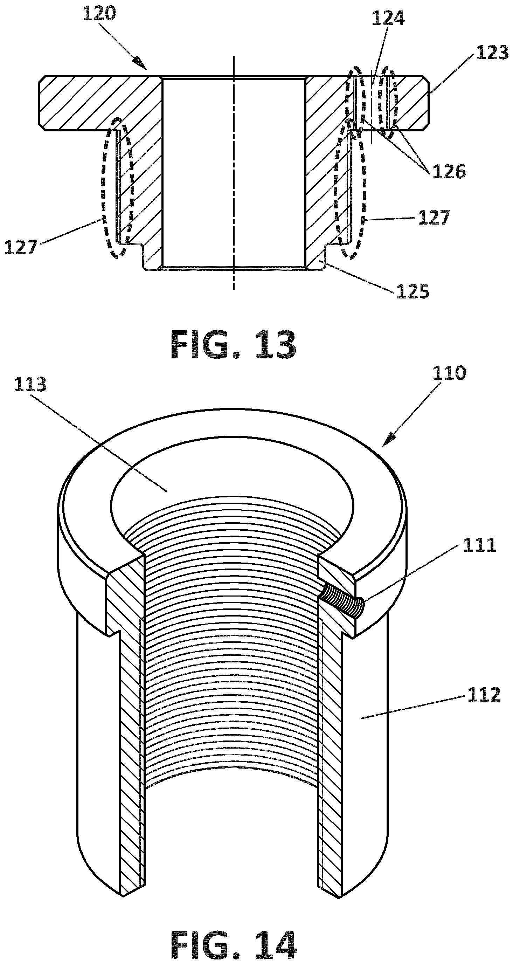

Figure 13 illustrates the position of a sixth thread (126) arranged on an inner wall hole (124), attaching said plug (120) with the second fixing means (121). It likewise illustrates the position of a seventh thread (127), arranged on an outer wall of the central section (122), attaching said plug (120) with the main body (100).

Finally, Figure 14 shows in greater detail a first preferred embodiment of the first position control nut (110) of the device. Said first position control nut (110) has a hollow cylindrical shape, with an outer face (112) and an inner face (113), forming a transverse hole housing the first fixing means (111). The inner face (113) is threaded, complementary to the cylindrical protuberance (101) of the main body (100). The base of the first position control nut (110) serves as an upper reference of the thickness of the extrusion volume (230), i.e., during certain steps of the method of the invention, a second contact region (240) is generated between the lower base of the first position control nut (110) and a second panel (220), referred to as an upper panel, which demarcates the extrusion volume (230).

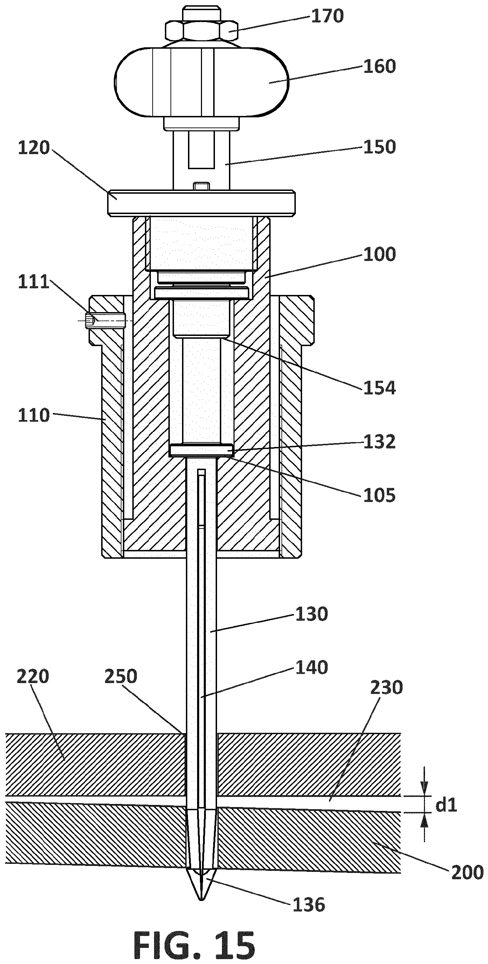

Figure 15 illustrates a first step of a particular embodiment of the temporary fixing method for extrusion of the invention, in which clamps (130) are introduced in the extrusion volume (230), going through a hole (250) previously made in a first panel (200) and a second panel (220). The hole (250) has a slightly larger diameter than the first region (133) of the clamps (130), therefore allowing the passage of said clamps (130) in the closed configuration, but preventing the passage thereof in the open configuration. The extrusion volume has a first thickness (d1) to be recovered after possible deformations due to the introduction of resins.

The introduction of the device in and the removal thereof from the extrusion volume (230) are, therefore, all performed in the closed configuration of the clamps (130). In other words, the lever (160) is turned until the protuberance (132) is moved vertically to the first stop (105) separating the first cavity (104) and the second cavity (106) of the main body (100). In this position, the tips (136) of the clamps (130) move forward until exceeding the cotter (140), coming into contact with one another.

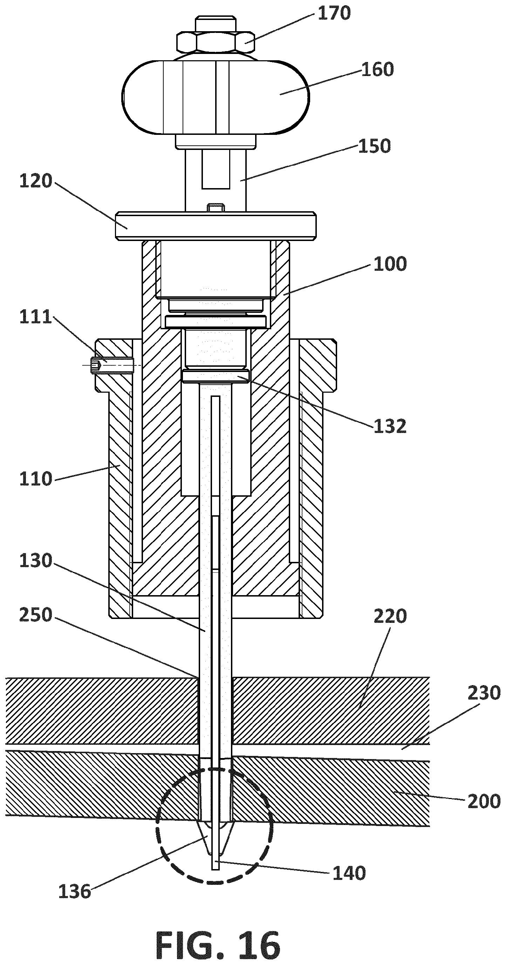

Figure 16 illustrates a second step of the particular embodiment of the temporary fixing method for extrusion of the invention, in which the lever (160) is turned to bring the clamps (130) to the open configuration. In other words, the protuberance (132) is moved vertically to the second stop (154), and the tips (136) of the clamps (130) are retracted until they are arranged on both sides of the cotter (140), preventing the passage thereof through the hole (250). In this configuration, the tips (136) of the clamps are moved until they come into contact with the first panel (200), serving as a lower thickness reference.

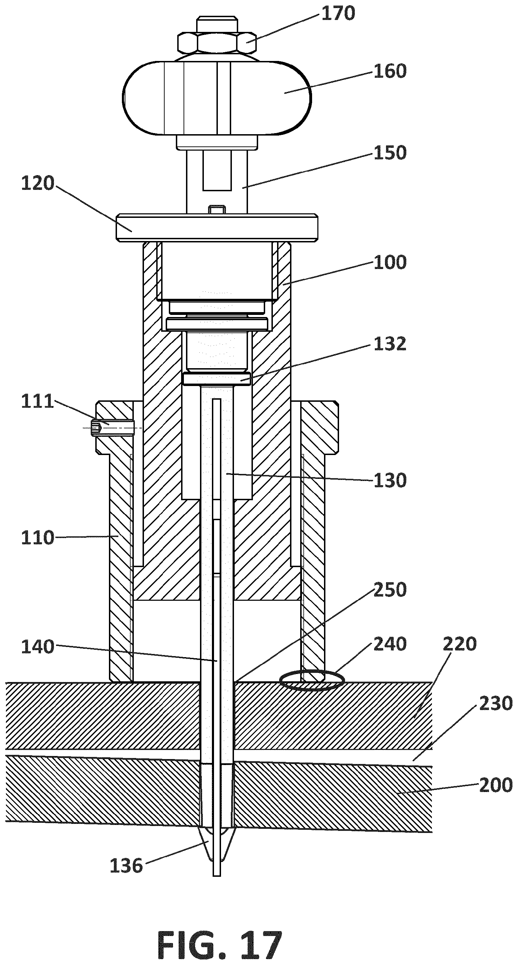

Figure 17 illustrates a third step of the particular embodiment of the temporary fixing method for extrusion of the invention, in which first position control nut (110) is turned until it comes into contact with the second panel (220), serving as an upper thickness reference. In said position of contact with the second panel (220), the first fixing means (111) are fixed to prevent future relative movements between the first position control nut (110) and the main body (100).

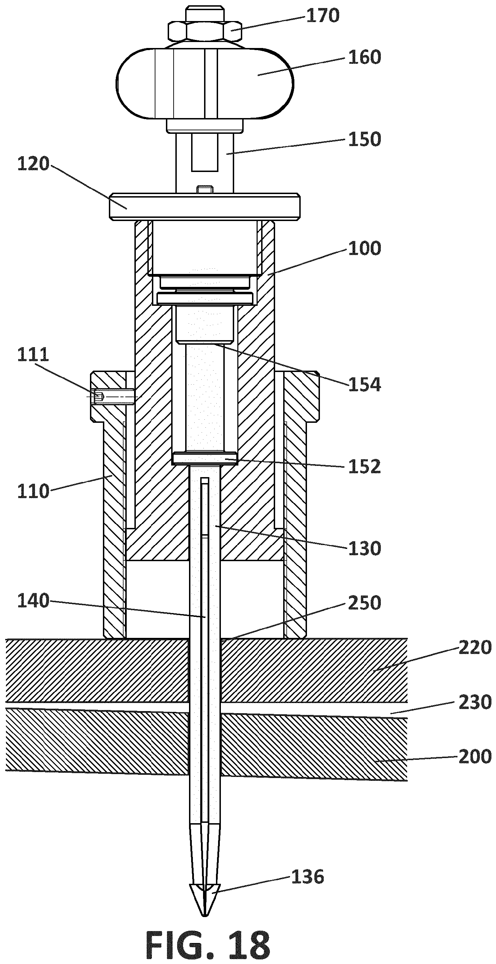

Figure 18 illustrates a fourth step of the particular embodiment of the temporary fixing method for extrusion of the invention, in which the clamps (130) are brought to the closed configuration by turning the lever (160) and moving the protuberance (132) to the first stop (105), allowing the removal of the device.

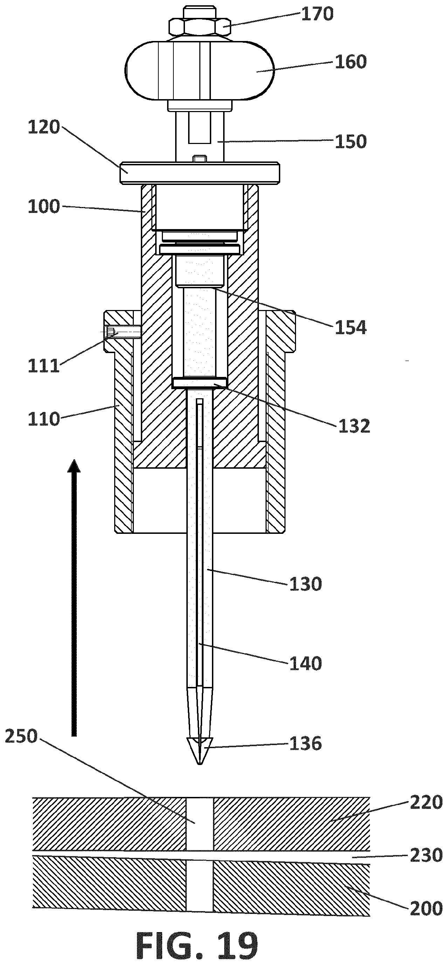

Figure 19 illustrates said removal of the device which constitutes a fifth step of the particular embodiment of the temporary fixing method for extrusion of the invention.

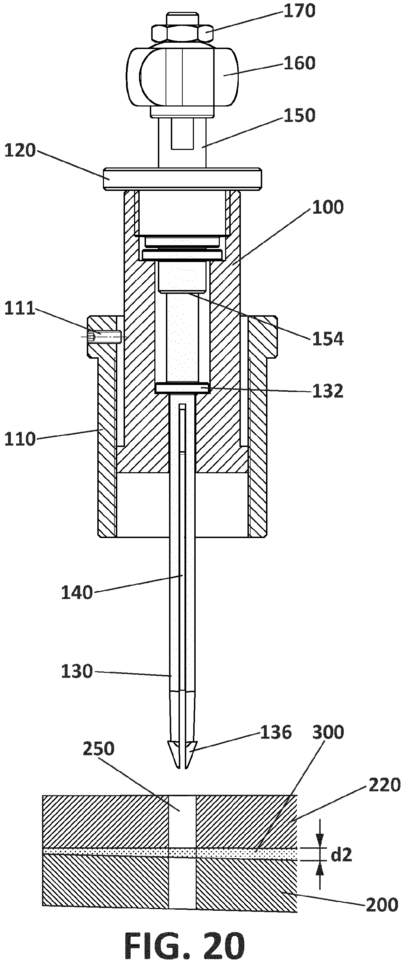

Figure 20 illustrates a sixth step of the particular embodiment of the temporary fixing method for extrusion of the invention, in which the extrusion volume (230) is filled with a resin (300) or shim, the high viscosity of which results in an increase to a second thickness (d2). This step may include the addition of any additional substance which is part of the extrusion process, such as liquid release agents, for example.

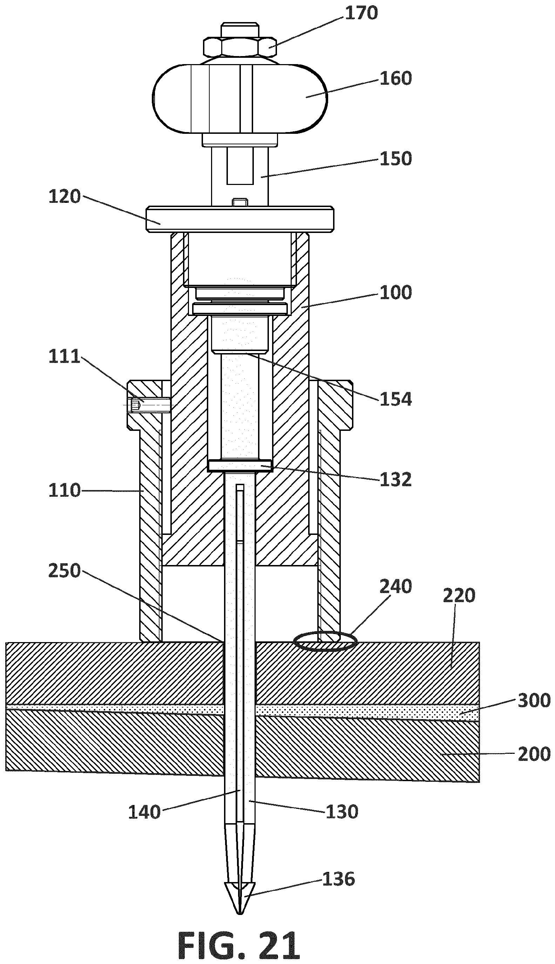

Figure 21 illustrates a seventh step of the particular embodiment of the temporary fixing method for extrusion of the invention, in which the clamps (130) of the device are introduced in the hole (250) again until the lower base of the first position control nut (110) comes into contact again with the second panel (220). The clamps (130) are introduced in the closed configuration.

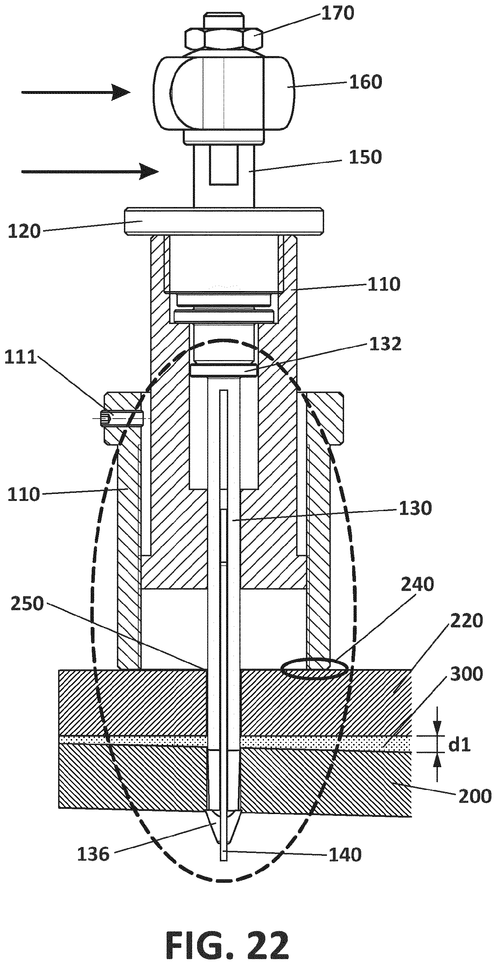

Figure 22 illustrates an eighth step of the particular embodiment of the temporary fixing method for extrusion of the invention, in which while maintaining the contact between the lower base of the first position control nut (110) and the second panel (220), the clamps (130) are brought to the open configuration and are moved until they come into contact with the first panel (200). This step results in the reduction of the extrusion volume to the first thickness (d1), with any surplus resin (300) being automatically driven out. Once said first thickness (d1) has been fixed, the resin (300) is cured.

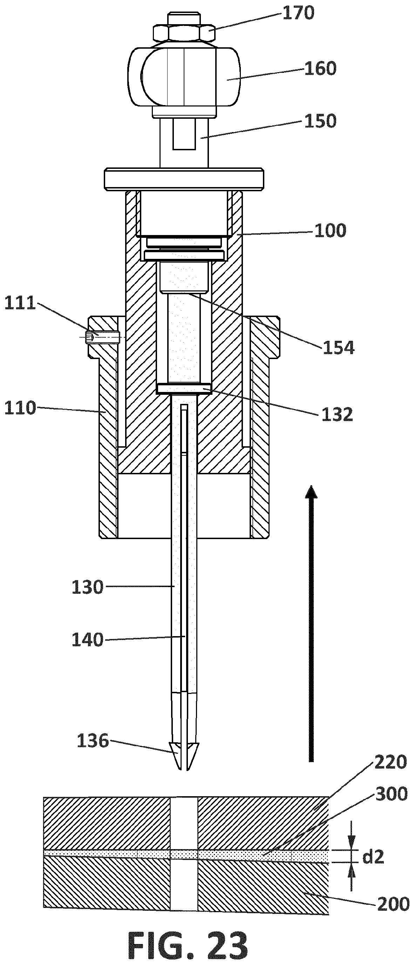

Figure 23 illustrates a ninth step of the particular embodiment of the temporary fixing method for extrusion of the invention, in which the clamps (130) are finally brought to the closed configuration by means of the subsequent turning of the lever (160), allowing the final removal of the device. To facilitate removal in the event that the resin is stuck to the clamps (130), the second position control nut (150) may comprise a slot for the application of fixed keys.

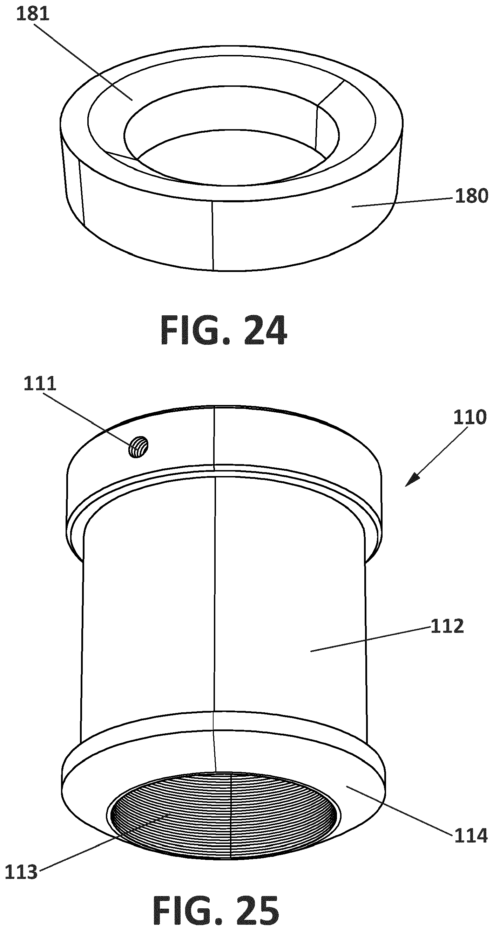

Figure 24 shows a preferred embodiment of a washer (180) of the device, forming a self-aligning assembly with a second preferred embodiment of the first position control nut (110), where said self-aligning assembly allows improving the performance of the device in the event that the hole (250) is not perpendicular to the second panel (220) on which the device is arranged. The washer (180) comprises a first flat base adapted for being arranged in contact with the second panel (220) and a second base with a conical surface (181) adapted for being arranged in contact with the first position control nut (110).

Figure 25 shows the second preferred embodiment of the first position control nut (110) of the device adapted to the case where said device comprises the washer (180). In this case, instead of having a flat base at the end of the outer face (112) and the inner face (113) adapted for being arranged directly on the second panel (220), the first position control nut (110) comprises at its base a second conical surface (114) facing the first conical surface (181) of the washer (180), with said washer (180) being arranged on the second panel (220).

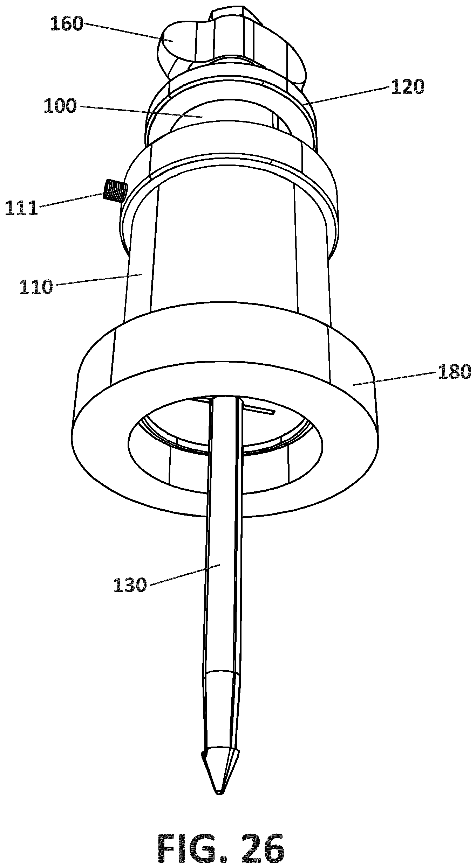

Figure 26 illustrates the arrangement of the washer (180) in the device, according to a preferred embodiment thereof. The washer (180) is therefore arranged in contact with the first position control nut (110) and allowing the passage of the cotter (140) therethrough.

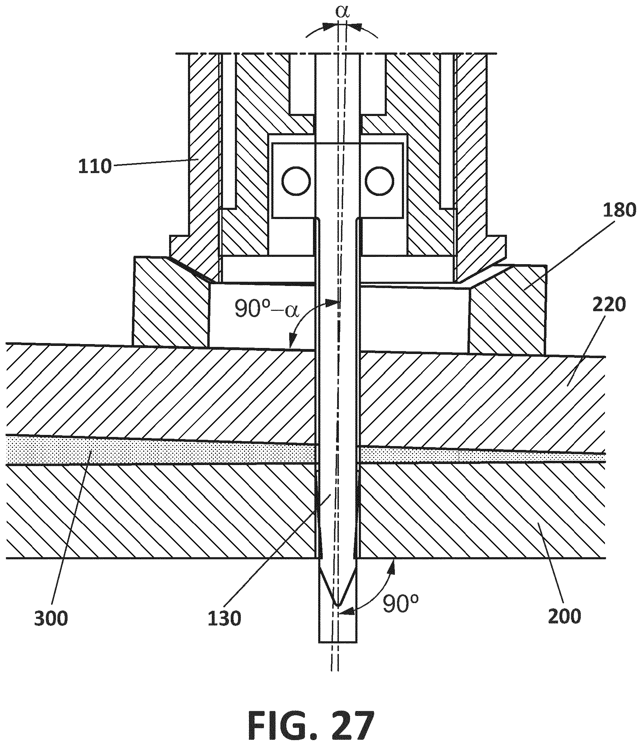

Finally, Figure 27 illustrates a particular embodiment of the method of the invention in which the temporary fixing device for extrusion comprises the described washer, allowing adaptation to the case where the surface on which the device is arranged (i.e., the second panel 220) is not perpendicular to the hole (250) going through said surface, deviating from said perpendicularity by an angle α. The washer (180) is arranged on said second panel (220), whereas the first position control nut (110) is arranged on said washer (180), the first conical surface (181) of the washer (180) and the second conical surface (114) of the first position control nut (110) being in contact with one another. The relative position of the first conical surface (181) and the second conical surface (114) is not fixed, but rather allows aligning the angle of the cotter with the axis of the hole (250) automatically, depending on the area in which said first conical surface (181) and second conical surface (114) come into contact with one another. In other words, as long as the washer (180) is aligned with the first panel (220), the rest of the device is aligned with the hole (250), regardless of the angle between said hole (250) and second panel (220).

In view of this description and drawings, one skilled in the art will be able to understand that the invention has been described according to some preferred embodiments thereof, but multiple variations may be introduced in said preferred embodiments without departing from the object of the invention as claimed.

## Claims

1. Temporary fixing device for extrusion, comprising a main body (100) inside which there are partially housed retractable clamps (130) arranged around a cotter (140), the clamps (130) being movable along a main axis between a first relative position and a second relative position with respect to the main body (100), where in the first position, at least two tips (136) of the clamps (130) are in contact, and in the second position, the at least two tips (136) of the clamps (130) are separated by the cotter (140);
wherein the temporary fixing device further comprises:
- a first position control nut (110) arranged around the main body (100), the first position control nut (110) being movable with respect to the main body (100) along the main axis by means of a thread arranged on an outer surface of said main body (100); .
- a second position control nut (150) housing a base (131) of the clamps (130), such that rotation of the second position control nut (150) results in a linear movement of the clamps (130); and
- first fixing means (111) which, when in a passage configuration, allow a relative movement between the first position control nut (110) and the main body (100), and when in a locking configuration, prevent said relative movement between the first position control nut (110) and the main body (100);
**characterized in that** the temporary fixing device further comprises a lever (160) integral with the second position control nut (150), the lever being arranged at one end of the device opposite the tips (136) of the clamps (130).

2. Device according to claim 1, **characterized in that** the first fixing means (111) comprise at least a first screwable stud bolt that can be screwed into a hole of the first position control nut (110), perpendicular to the main axis, the first screwable stud bolt exerting pressure on an outer surface of the main body (100) when arranged in the locking configuration.

3. Device according to any of the preceding claims, **characterized in that** it further comprises second fixing means (121) which, when in a passage configuration, allow a relative movement between the second position control nut (150) and the main body (100), and when in a locking configuration, prevent said relative movement between the second position control nut (150) and the main body (100).

4. Device according to claim 3, **characterized in that** the second fixing means (121) comprise at least a second screwable stud bolt that can be screwed into a hole of a plug (120) parallel to the main axis, the plug (120) being arranged at one end of the main body (100) opposite the tips (136) of the clamps (130), and the second screwable stud bolt exerting pressure on the main body (100) when arranged in the locking configuration.

5. Device according to any of the preceding claims, **characterized in that** the main body (100) comprises a first inner cavity (104) and a second inner cavity (106) parallel to the main axis, the first inner cavity (104) having a section that is larger in size than the second inner cavity (106), and **in that** the clamps (130) comprise at least one protuberance (132) perpendicular to the main axis, such that when said protuberance (132) is in contact with a first stop (105) separating the first inner cavity (104) and the second inner cavity (106), the clamps (130) are in the first relative position in which the tips (136) are in contact.

6. Device according to claim 5, **characterized in that** it further comprises a second stop (154) introduced in the first inner cavity (104), such that when the protuberance (132) of the clamps (130) is in contact with the second stop (154), the clamps (130) are in the second relative position in which the tips (136) are separated.

7. Device according to any of the preceding claims, **characterized in that** it comprises a washer (180) with a first conical surface (181), and **in that** the first position control nut (110) comprises a second conical surface (114), with the first conical surface (181) and the second conical surface (114) facing one another.

8. Temporary fixing method for extrusion, which comprises:
- providing a temporary fixing device according to any of the preceding claims;
- introducing the retractable clamps (130) in a hole (250) that goes through a first panel (200) and a second panel (220) demarcating an extrusion space (230) with a first thickness (d1); the clamps (130) being housed in a main body (100) and arranged around a cotter (140); the clamps (130) being introduced in a first relative position with respect to the main body (100) in which at least two tips (136) of the clamps (130) are in contact;
- moving the clamps (130) to a second position in which the tips (136) of the clamps (130) are separated by the cotter (140) and in contact with the first panel (200);
**characterized in that** it further comprises:
- moving a first position control nut (110) by means of a thread arranged on an outer surface of the main body (100);
- removing the clamps (130) from the hole (250);
- filling the extrusion space (230) with a resin (300), with said extrusion space (230) being increased to a second thickness (d2);
- reintroducing the clamps (130) in the hole; the clamps (130) being introduced in a first relative position with respect to the main body (100) in which the tips (136) of the clamps (130) are in contact;
- moving the clamps (130) to a second position in which the tips (136) of the clamps (130) are separated by the cotter (140) and in contact with the first panel (200), reducing the extrusion space (230) to the first thickness (d1); and
- waiting out the curing time corresponding to the resin used, and removing the clamps again, first moving them to the first position in which the tips of the clamps are in contact to allow the passage thereof through the hole.

9. Method according to claim 8, **characterized in that** the step of removing the clamps (130) comprises moving said clamps (130) to the first relative position with respect to the main body (100) in which the tips (136) of the clamps (130) are in contact.

10. Method according to any of claims 8 and 9, **characterized in that** the step of introducing the clamps (130) in the first position comprises arranging a protuberance of the clamps (130), perpendicular to the main axis, next to a first stop (105) separating a first inner cavity (104) and a second inner cavity (106) of the main body (100), where the first inner cavity (104) has a section that is larger in size than the second inner cavity (106).

11. Method according to claim 10, **characterized in that** the step of moving the clamps (130) to the second position comprises arranging the protuberance of the clamps (130) next to a second stop (154) introduced in the first inner cavity (104).

12. Method according to any of claims 8 to 11, **characterized in that** it further comprises:
- arranging a washer (180) with a first conical surface (181) in contact with the second panel (220); and
- arranging a second conical surface (114) of the first position control nut (110) in contact with the first conical surface (181), such that the cotter is aligned with the hole (250) regardless of the angle between said hole (250) and the second panel (220).

## Patentansprüche

1. Temporäre Befestigungsvorrichtung für Extrusion, umfassend einen Hauptkörper (100), in dem teilweise untergebrachte einziehbare Klammern (130) um einen Keil (140) herum angeordnet sind, wobei die Klammern (130) entlang einer Hauptachse zwischen einer ersten relativen Position und einer zweiten relativen Position in Bezug auf den Hauptkörper (100) bewegt werden können, wobei in der ersten Position mindestens zwei Spitzen (136) der Klammern (130) in Kontakt sind und in der zweiten Position die mindestens zwei Spitzen (136) der Klammern (130) durch den Keil (140) getrennt sind;
wobei die temporäre Befestigungsvorrichtung ferner umfasst:
- eine erste Positionskontrollmutter (110), die um den Hauptkörper (100) herum angeordnet ist, wobei die erste Positionskontrollmutter (110) in Bezug auf den Hauptkörper (100) entlang der Hauptachse mittels eines Gewindes, das auf einer äußeren Oberfläche des Hauptkörpers (100) angeordnet ist, beweglich ist;
- eine zweite Positionskontrollmutter (150), die eine Basis (131) der Klemmen (130) aufnimmt, so dass die Drehung der zweiten Positionskontrollmutter (150) zu einer linearen Bewegung der Klemmen (130) führt; und
- erste Befestigungsmittel (111), die in einer Durchlasskonfiguration eine Relativbewegung zwischen der ersten Positionskontrollmutter (110) und dem Hauptkörper (100) ermöglichen und in einer Verriegelungskonfiguration die Relativbewegung zwischen der ersten Positionskontrollmutter (110) und dem Hauptkörper (100) verhindern;
**dadurch gekennzeichnet, dass** die temporäre Befestigungsvorrichtung außerdem einen Hebel (160) umfasst, der fest mit der zweiten Positionskontrollmutter (150) verbunden ist, wobei der Hebel an einem Ende der Vorrichtung gegenüber den Spitzen (136) der Klammern (130) angeordnet ist.

2. Vorrichtung nach Anspruch 1, **dadurch gekennzeichnet, dass** die ersten Befestigungsmittel (111) mindestens einen ersten schraubbaren Stehbolzen umfassen, der in ein Loch der ersten Positionskontrollmutter (110) senkrecht zur Hauptachse eingeschraubt werden kann, wobei der erste schraubbare Stehbolzen in der Verriegelungskonfiguration Druck auf eine Außenfläche des Hauptkörpers (100) ausübt.

3. Vorrichtung nach einem der vorhergehenden Ansprüche, **dadurch gekennzeichnet, dass** sie ferner zweite Befestigungsmittel (121) umfasst, die in einer Durchlasskonfiguration eine Relativbewegung zwischen der zweiten Positionskontrollmutter (150) und dem Hauptkörper (100) ermöglichen und in einer Verriegelungskonfiguration die Relativbewegung zwischen der zweiten Positionskontrollmutter (150) und dem Hauptkörper (100) verhindern.

4. Vorrichtung nach Anspruch 3, **dadurch gekennzeichnet, dass** das zweite Befestigungsmittel (121) mindestens einen zweiten schraubbaren Stehbolzen umfasst, der in ein Loch eines zur Hauptachse parallelen Stopfens (120) einschraubbar ist, wobei der Stopfen (120) an einem den Spitzen (136) der Klammern (130) gegenüberliegenden Ende des Hauptkörpers (100) angeordnet ist und der zweite schraubbare Stehbolzen in der Verriegelungskonfiguration Druck auf den Hauptkörper (100) ausübt.

5. Vorrichtung nach einem der vorhergehenden Ansprüche, **dadurch gekennzeichnet, dass** der Hauptkörper (100) einen ersten inneren Hohlraum (104) und einen zweiten inneren Hohlraum (106) parallel zur Hauptachse umfasst, wobei der erste innere Hohlraum (104) einen größeren Querschnitt als der zweite innere Hohlraum (106) aufweist, und dass die Klammern (130) mindestens eine Ausstülpung (132) senkrecht zur Hauptachse umfassen, so dass, wenn die Ausstülpung (132) in Kontakt mit einem ersten Anschlag (105) ist, der den ersten inneren Hohlraum (104) und den zweiten inneren Hohlraum (106) trennt, die Klammern (130) in der ersten relativen Position sind, in welcher die Spitzen (136) in Kontakt sind.

6. Vorrichtung nach Anspruch 5, **dadurch gekennzeichnet, dass** sie ferner einen zweiten Anschlag (154) umfasst, der in den ersten inneren Hohlraum (104) eingeführt ist, so dass, wenn die Ausstülpung (132) der Klammern (130) in Kontakt mit dem zweiten Anschlag (154) ist, die Klammern (130) in der zweiten relativen Position sind, in welcher die Spitzen (136) getrennt sind.

7. Vorrichtung nach einem der vorhergehenden Ansprüche, **dadurch gekennzeichnet, dass** sie eine Unterlegscheibe (180) mit einer ersten konischen Fläche (181) umfasst, und dass die erste Positionskontrollmutter (110) eine zweite konische Fläche (114) umfasst, wobei die erste konische Fläche (181) und die zweite konische Fläche (114) einander gegenüberliegen.

8. Temporäres Befestigungsverfahren für Extrusion, das Folgendes umfasst:
- Bereitstellen einer temporären Befestigungsvorrichtung nach einem der vorhergehenden Ansprüche;
- Einführen der einziehbaren Klammern (130) in ein Loch (250), das durch eine erste Platte (200) und eine zweite Platte (220) geht, die einen Extrusionsraum (230) mit einer ersten Dicke (d1) abgrenzen; wobei die Klammern (130) in einem Hauptkörper (100) untergebracht und um einen Keil (140) herum angeordnet sind; wobei die Klammern (130) in einer ersten relativen Position in Bezug auf den Hauptkörper (100) eingeführt werden, in welcher mindestens zwei Spitzen (136) der Klammern (130) in Kontakt sind;
- Bewegen der Klammern (130) in eine zweite Position, in welcher die Spitzen (136) der Klammern (130) durch den Keil (140) getrennt und in Kontakt mit der ersten Platte (200) sind;
**dadurch gekennzeichnet, dass** es ferner umfasst:
- Bewegen einer ersten Positionskontrollmutter (110) mittels eines Gewindes, das auf einer Außenfläche des Hauptkörpers (100) angeordnet ist;
- Entfernen der Klammern (130) aus dem Loch (250);
- Füllen des Extrusionsraums (230) mit einem Harz (300), wobei der Extrusionsraum (230) auf eine zweite Dicke (d2) vergrößert wird;
- Wiedereinführen der Klammern (130) in das Loch, wobei die Klammern (130) in eine erste relative Position in Bezug auf den Hauptkörper (100) eingeführt werden, in welcher die Spitzen (136) der Klammern (130) in Kontakt sind;
- Bewegen der Klammern (130) in eine zweite Position, in welcher die Spitzen (136) der Klammern (130) durch den Keil (140) getrennt und in Kontakt mit der ersten Platte (200) sind, wodurch der Extrusionsraum (230) auf die erste Dicke (d1) reduziert wird; und
- Abwarten der Aushärtungszeit entsprechend dem verwendeten Harz und erneutes Entfernen der Klammern, wobei sie zunächst in die erste Position gebracht werden, in welcher die Spitzen der Klammern in Kontakt sind, um ihren Durchgang durch das Loch zu ermöglichen.

9. Verfahren nach Anspruch 8, **dadurch gekennzeichnet, dass** der Schritt des Entfernens der Klammern (130) Bewegen der Klammern (130) in die erste relative Position in Bezug auf den Hauptkörper (100) umfasst, in welcher die Spitzen (136) der Klammern (130) in Kontakt sind.

10. Verfahren nach einem der Ansprüche 8 und 9, **dadurch gekennzeichnet, dass** der Schritt des Einführens der Klammern (130) in die erste Position Anordnen einer Ausstülpung der Klammern (130) senkrecht zur Hauptachse neben einem ersten Anschlag (105) umfasst, der einen ersten inneren Hohlraum (104) und einen zweiten inneren Hohlraum (106) des Hauptkörpers (100) trennt, wobei der erste innere Hohlraum (104) einen Querschnitt aufweist, der größer ist als der zweite innere Hohlraum (106).

11. Verfahren nach Anspruch 10, **dadurch gekennzeichnet, dass** der Schritt des Bewegens der Klammern (130) in die zweite Position Anordnen der Ausstülpung der Klammern (130) neben einem zweiten Anschlag (154) umfasst, der in den ersten inneren Hohlraum (104) eingeführt ist.

12. Verfahren nach einem der Ansprüche 8 bis 11, **dadurch gekennzeichnet, dass** es ferner umfasst:
- Anordnen einer Unterlegscheibe (180) mit einer ersten konischen Oberfläche (181) in Kontakt mit der zweiten Platte (220); und
- Anordnen einer zweiten konischen Fläche (114) der ersten Positionskontrollmutter (110) in Kontakt mit der ersten konischen Fläche (181), so dass der Keil mit dem Loch (250) ausgerichtet ist, unabhängig von dem Winkel zwischen dem Loch (250) und der zweiten Platte (220).

## Revendications

1. Dispositif de fixation temporaire pour extrusion, comprenant un corps principal (100) à l'intérieur duquel se trouvent des pinces rétractables partiellement logées (130) agencées autour d'une clavette d'arrêt (140), les pinces (130) étant mobiles le long d'un axe principal entre une première position relative et une deuxième position relative par rapport au corps principal (100), où dans la première position, au moins deux pointes (136) des pinces (130) sont en contact, et dans la deuxième position, les au moins deux pointes (136) des pinces (130) sont séparées par la clavette d'arrêt (140) ;
dans lequel le dispositif de fixation temporaire comprend en outre :
- un premier écrou de commande de position (110) agencé autour du corps principal (100), le premier écrou de commande de position (110) étant mobile par rapport au corps principal (100) le long de l'axe principal au moyen d'un filetage agencé sur une surface externe dudit corps principal (100) ;
- un deuxième écrou de commande de position (150) logeant une base (131) des pinces (130), de sorte qu'une rotation du deuxième écrou de commande de position (150) résulte en un mouvement linéaire des pinces (130) ; et
- des premiers moyens de fixation (111) qui, lorsqu'ils sont dans une configuration de passage, permettent un mouvement relatif entre le premier écrou de commande de position (110) et le corps principal (100), et lorsqu'ils sont dans une configuration de verrouillage, empêchent ledit mouvement relatif entre le premier écrou de commande de position (110) et le corps principal (100) ;
**caractérisé en ce que** le dispositif de fixation temporaire comprend en outre un levier (160) d'une seule pièce avec le deuxième écrou de commande de position (150), le levier étant agencé au niveau d'une extrémité du dispositif opposée aux pointes (136) des pinces (130).

2. Dispositif selon la revendication 1, **caractérisé en ce que** les premiers moyens de fixation (111) comprennent au moins un premier goujon qui peut être vissé dans un trou du premier écrou de commande de position (110), perpendiculaire à l'axe principal, le premier goujon vissable exerçant une pression sur une surface externe du corps principal (100) lorsqu'il est agencé dans la configuration de verrouillage.

3. Dispositif selon l'une quelconque des revendications précédentes, **caractérisé en ce qu'**il comprend en outre des deuxièmes moyens de fixation (121) qui, lorsqu'ils sont dans une configuration de passage, permettent un mouvement relatif entre le deuxième écrou de commande de position (150) et le corps principal (100), et lorsqu'ils sont dans une configuration de verrouillage, empêchent ledit mouvement relatif entre le deuxième écrou de commande de position (150) et le corps principal (100).

4. Dispositif selon la revendication 3, **caractérisé en ce que** les deuxièmes moyens de fixation (121) comprennent au moins un deuxième goujon vissable qui peut être vissé dans un trou d'une fiche (120) parallèle à l'axe principal, la fiche (120) étant agencée au niveau d'une extrémité du corps principal (100) opposée aux pointes (136) des pinces (130), et le deuxième goujon vissable exerçant une pression sur le corps principal (100) lorsqu'il est agencé dans la configuration de verrouillage.

5. Dispositif selon l'une quelconque des revendications précédentes, **caractérisé en ce que** le corps principal (100) comprend une première cavité interne (104) et une deuxième cavité interne (106) parallèle à l'axe principal, la première cavité interne (104) ayant une section qui est plus grande en taille que la deuxième cavité interne (106), et **en ce que** les pinces (130) comprennent au moins une protubérance (132) perpendiculaire à l'axe principal, de sorte que lorsque ladite protubérance (132) est en contact avec une première butée (105) séparant la première cavité interne (104) et la deuxième cavité interne (106), les pinces (130) sont dans la première position relative dans laquelle les pointes (136) sont en contact.

6. Dispositif selon la revendication 5, **caractérisé en ce qu'**il comprend en outre une deuxième butée (154) introduite dans la première cavité interne (104), de sorte que lorsque la protubérance (132) des pinces (130) est en contact avec la deuxième butée (154), les pinces (130) sont dans la deuxième position relative dans laquelle les pinces (136) sont séparées.

7. Dispositif selon l'une quelconque des revendications précédentes, **caractérisé en ce qu'**il comprend une rondelle (180) avec une première surface conique (181), et **en ce que** le premier écrou de commande de position (110) comprend une deuxième surface conique (114), avec la première surface conique (181) et la deuxième surface conique (114) se faisant face.

8. Procédé de fixation temporaire pour extrusion, qui comprend :
- la fourniture d'un dispositif de fixation temporaire selon l'une quelconque des revendications précédentes ;
- l'introduction des pinces rétractables (130) dans un trou (250) qui traverse un premier panneau (200) et un deuxième panneau (220) délimitant un espace d'extrusion (230) avec une première épaisseur (d1) ; les pinces (130) étant logées dans un corps principal (100) et agencées autour d'une clavette d'arrêt (140) ; les pinces (130) étant introduites dans une première position relative par rapport au corps principal (100) dans laquelle au moins deux pointes (136) des pinces (130) sont en contact ;
- le déplacement des pinces (130) vers une deuxième position dans laquelle les pointes (136) des pinces (130) sont séparées par la clavette d'arrêt (140) et en contact avec le premier panneau (200) ;
**caractérisé en ce qu'**il comprend en outre :
- le déplacement d'un premier écrou de commande de position (110) au moyen d'un filetage agencé sur une surface externe du corps principal (100) ;
- le retrait des pinces (130) du trou (250) ;
- le remplissage de l'espace d'extrusion (230) avec une résine (300), ledit espace d'extrusion (230) étant augmenté pour atteindre une deuxième épaisseur (d2) ;
- la réintroduction des pinces (130) dans le trou ; les pinces (130) étant introduites dans une première position relative par rapport au corps principal (100) dans laquelle les pointes (136) des pinces (130) sont en contact ;
- le déplacement des pinces (130) vers une deuxième position dans laquelle les pointes (136) des pinces (130) sont séparées par la clavette d'arrêt (140) et en contact avec le premier panneau (200), réduisant l'espace d'extrusion (230) à la première épaisseur (d1) ; et
- l'attente pendant le temps de durcissement correspondant à la résine utilisée, et le retrait des pinces une nouvelle fois, en les déplaçant d'abord vers la première position dans laquelle les pointes des pinces sont en contact pour permettre leur passage à travers le trou.

9. Procédé selon la revendication 8, **caractérisé en ce que** l'étape de retrait des pinces (130) comprend le déplacement desdites pinces (130) vers la première position relative par rapport au corps principal (100) dans laquelle les pointes (136) des pinces (130) sont en contact.

10. Procédé selon l'une quelconque des revendications 8 et 9, **caractérisé en ce que** l'étape d'introduction des pinces (130) dans la première position comprend l'agencement d'une protubérance des pinces (130), perpendiculaire à l'axe principal, à côté d'une première butée (105) séparant une première cavité interne (104) et une deuxième cavité interne (106) du corps principal (100), où la première cavité interne (104) a une section qui est plus grande en taille que la deuxième cavité interne (106).

11. Procédé selon la revendication 10, **caractérisé en ce que** l'étape de déplacement des pinces (130) vers la deuxième position comprend l'agencement de la protubérance des pinces (130) à côté d'une deuxième butée (154) introduite dans la première cavité interne (104).

12. Procédé selon l'une quelconque des revendications 8 à 11, **caractérisé en ce qu'**il comprend en outre :
- l'agencement d'une rondelle (180) avec une première surface conique (181) en contact avec le deuxième panneau (220) ; et
- l'agencement d'une deuxième surface conique (114) du premier écrou de commande de position (110) en contact avec la première surface conique (181), de sorte que la clavette d'arrêt est alignée avec le trou (250) quel que soit l'angle entre ledit trou (250) et le deuxième panneau (220) .
